(19)

Europäisches Patentamt

European Patent Office

Office européen des brevets

(11) **EP 2 251 804 A2**

(12) **EUROPÄISCHE PATENTANMELDUNG**

(43) Veröffentlichungstag:
**17.11.2010  Patentblatt 2010/46**

(51) Int Cl.:
***G06F 17/50*** *(2006.01)*

(21) Anmeldenummer: **10152894.1**

(22) Anmeldetag: **08.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **11.05.2009   DE 102009020675**

(71) Anmelder: **SIEMENS AKTIENGESELLSCHAFT 80333 München (DE)**

(72) Erfinder:
• **Montrone, Francesco Dr.**
  **85521, Riemerling (DE)**
• **Schulte, Robert**
  **Longwood, 32779 (US)**
• **Streer, Wolfgang**
  **Orlando, 32817 (US)**
• **Sutor, Ariane Dr.**
  **82166, Gräfelfing (DE)**

(54) **Verfahren zur rechnergestützten Simulation von Betriebsparametern eines technischen Systems**

(57)    Die Erfindung betrifft ein Verfahren zur rechnergestützten Simulation von Betriebsparametern (O) eines technischen Systems, wobei das technische System eine Mehrzahl von Modulen (1, 2, ..., 9) umfasst, welche jeweils eine oder mehrere Komponenten (10, 11, 12) beinhalten. In einem Schritt a) werden in einem vorgegebenen Betriebszeitraum jeweils Ausfallereignisse mit daran anschließenden Ausfallzeiten für jede Komponente (10, 11, 12) eines jeweiligen Moduls (1, 2, ..., 9) mit Hilfe einer ersten Wahrscheinlichkeitsverteilung für den Ausfallzeitpunkt der jeweiligen Komponente (10, 11, 12) und einer zweiten Wahrscheinlichkeitsverteilung für die Länge des Ausfalls der jeweiliger Komponente (10, 11, 12) simuliert und hieraus wird eine Wahrscheinlichkeitsverteilung für ein Zuverlässigkeitsmaß (r) des jeweiligen Moduls (1, 2, ..., 9) bestimmt. Anschließend werden in einem Schritt b) basierend auf den Wahrscheinlichkeitsverteilungen für die Zuverlässigkeitsmaße der jeweiligen Module (1, 2, ..., 9) Betriebsparameter (0) des technischen Systems für den vorgegebenen Betriebszeitraum simuliert. Das erfindungsgemäße Verfahren ermöglicht durch eine ereignis-diskrete Simulation von Ausfällen eine gute Prognose von Betriebsparametern eines technischen Systems in einem vorgegebenen Betriebszeitraum. Das Verfahren kann dabei für beliebige technische Anlagen, beispielsweise für Energieerzeugungsanlagen, eingesetzt werden.

FIG 1

EP 2 251 804 A2

**Beschreibung**

Die Erfindung betrifft ein Verfahren zur rechnergestützten Simulation von Betriebsparametern eines technischen Systems sowie ein entsprechendes Computerprogrammprodukt.

Für den wirtschaftlichen Betrieb eines technischen Systems ist eine hohe Zuverlässigkeit, Verfügbarkeit und Wartbarkeit des technischen Systems eine Grundvoraussetzung. Deshalb besteht beim Entwurf von neuen technischen Systems das Bedürfnis, bereits bei der Planung des Systems verschiedene Konfigurationen dieses Systems rechnergestützt zu simulieren und entsprechende, von der Zuverlässigkeit des technischen Systems abhängige Betriebsparameter zu bestimmen. Aus dem Stand der Technik sind Ansätze bekannt, bei denen der Erwartungswert der Verfügbarkeit eines technischen Systems rechnergestützt ermittelt wird. Da der Erwartungswert ein Mittelwert ist, wird hierdurch nicht in geeigneter Weise das dynamische Ausfallverhalten des technischen Systems in Bezug auf einen entsprechenden Betriebszeitraum des technischen Systems berücksichtigt.

Aufgabe der Erfindung ist es deshalb, Betriebsparameter eines technischen Systems rechnergestützt derart zu simulieren, dass das in einem vorgegebenen Betriebszeitraum auftretende dynamische Ausfallverhalten des Systems berücksichtigt wird.

Diese Aufgabe wird durch das Verfahren gemäß Patentanspruch 1 gelöst. Weiterbildungen der Erfindung sind in den abhängigen Ansprüchen definiert.

In dem erfindungsgemäßen Verfahren werden Betriebsparameter eines technischen Systems simuliert, welches eine Mehrzahl von Modulen umfasst, die wiederum jeweils eine oder mehrere Komponenten beinhalten. Der Begriff "technisches System" ist dabei weit auszulegen und kann eine technische Anlage als Ganzes bzw. auch nur entsprechende Teile einer technischen Anlage umfassen. Erfindungsgemäß werden in einem Schritt a) in einem vorgegebenen Betriebszeitraum des technischen Systems jeweils Ausfallereignisse mit daran anschließenden Ausfallzeiten für jede Komponente eines jeweiligen Moduls des technischen Systems mit Hilfe einer ersten Wahrscheinlichkeitsverteilung für den Ausfallzeitpunkt der jeweiligen Komponente und einer zweiten Wahrscheinlichkeitsverteilung für die Länge des Ausfalls der jeweiligen Komponente simuliert. Daraus wird dann eine Wahrscheinlichkeitsverteilung für ein Zuverlässigkeitsmaß (z.B. für einen prozentualen Zuverlässigkeitswert) des jeweiligen Moduls bestimmt. Das Zuverlässigkeitsmaß kann z.B. durch den Anteil von ausfallfreier Betriebszeit de jeweiligen Moduls im Betriebszeitraum charakterisiert sein. Die erste und zweite Wahrscheinlichkeitsverteilung sind dabei vorgegeben und wurden beispielsweise empirisch für die einzelnen, im technischen System zu verbauenden Komponenten bestimmt. In einem Schritt b) des erfindungsgemäßen Verfahrens werden schließlich basierend auf den in Schritt a) ermittelten Wahrscheinlichkeitsverteilungen für die Zuverlässigkeitsmaße der jeweiligen Module Betriebsparameter des technischen Systems für den vorgegebenen Betriebszeitraum simuliert.

Das erfindungsgemäße Verfahren zeichnet sich dadurch aus, dass mit Hilfe einer ereignis-diskreten Simulation für den relevanten Betriebszeitraum Ausfälle und Ausfallzeiten ermittelt werden und hierdurch in geeigneter Weise das dynamische Ausfallverhalten des technischen Systems in dem betrachteten Betriebszeitraum berücksichtigt wird. Hierdurch wird eine realistische Abschätzung entsprechender, von der Zuverlässigkeit der einzelnen Module des technischen Systems abhängiger Betriebsparameter erreicht. Auf diese Weise kann die Wirtschaftlichkeit eines zu entwerfenden technischen Systems vor dessen Bau beurteilt werden. Ebenso können verschiedene Konfigurationen von technischen Systemen simuliert werden und miteinander verglichen werden, um hierdurch die Konfiguration mit den besten Parametern zu ermitteln.

In einer besonders bevorzugten Ausführungsform der Erfindung wird in Schritt a) eine Monte-Carlo-Simulation zur Simulation der Ausfallereignisse mit daran anschließenden Ausfallzeiten eingesetzt. Analog wird in einer weiteren bevorzugten Ausführungsform in Schritt b) eine Monte-Carlo-Simulation zur Simulation der Betriebsparameter basierend auf den Wahrscheinlichkeitsverteilungen verwendet. Monte-Carlo-Simulationen sind aus dem Bereich der Stochastik hinlänglich bekannt. Bei diesen Simulationen wird mit entsprechenden Wahrscheinlichkeitsverteilungen eine Vielzahl von Zufallexperimenten durchgeführt. In der detaillierten Beschreibung wird dargelegt, wie entsprechende Monte-Carlo-Simulationen sowohl in Schritt a) als auch in Schritt b) des erfindungsgemäßen Verfahrens verwendet werden können.

In einer besonders bevorzugten Ausführungsform des erfindungsgemäßen Verfahrens wird in Schritt a) eine Vielzahl von Simulationsschritten durchgeführt, wobei in jedem Simulationsschritt Ausfallereignisse mit daran anschließenden Ausfallzeiten für alle Komponenten eines jeweiligen Moduls im vorgegebenen Betriebszeitraum simuliert werden und durch Kombination der Komponenten des jeweiligen Moduls über einen Fehlerbaum das Zuverlässigkeitsmaß des jeweiligen Moduls als Anteil von ausfallfreier Betriebszeit des jeweiligen Moduls im vorgegebenen Betriebszeitraum bestimmt wird, wobei aus den Häufigkeiten der in der Vielzahl von Simulationsschritten ermittelten Zuverlässigkeitsmaße die Wahrscheinlichkeitsverteilung für das Zuverlässigkeitsmaß des jeweiligen Moduls bestimmt wird. In dieser Ausführungsform der Erfindung wird das Zusammenwirken von entsprechenden Ausfällen einzelner Komponenten in einem Modul durch einen vorgegebenen Fehlerbaum beschrieben, der angibt, unter welchen Bedingungen der Ausfall von bestimmten Komponenten zu dem Ausfall des jeweiligen Moduls führt. Die Beschreibung von Ausfällen in technischen Systemen über Fehlerbäume ist dabei hinlänglich aus dem Stand der Technik bekannt und wird deshalb an dieser Stelle nicht weiter erläutert.

In einer weiteren Ausgestaltung des erfindungsgemäßen Verfahrens ist die erste Wahrscheinlichkeitsverteilung für den Ausfallzeitpunkt einer jeweiligen Komponente eines jeweiligen Moduls eine Exponentialverteilung. Vorzugsweise wird die Dichte der ersten Wahrscheinlichkeitsverteilung dabei wie folgt beschrieben:

$$f(t) = \lambda e^{-\lambda t} \quad ,$$

wobei t den Ausfallzeitpunkt nach der Inbetriebnahme der jeweiligen Komponente oder Wiederinbetriebnahme der jeweiligen Komponente nach einem Ausfall repräsentiert;

wobei $\lambda$ = 1/MTBF, wobei MTBF die mittlere Zeitdauer zwischen zwei Ausfällen ist.

Analog ist in einer weiteren Ausgestaltung des erfindungsgemäßen Verfahrens die zweite Wahrscheinlichkeitsverteilung für die Länge des Ausfalls einer jeweiligen Komponente eines jeweiligen Moduls ebenfalls eine Exponentialverteilung. Vorzugsweise lautet die Dichte der zweiten Wahrscheinlichkeitsverteilung dabei wie folgt:

$$g(x) = \beta e^{-\beta x} \quad ,$$

wobei x die Länge eines Ausfalls der jeweiligen Komponente repräsentiert;

wobei $\beta$ = 1/MDT, wobei MDT die mittlere Zeitdauer eines Ausfalls der jeweiligen Komponente ist.

Durch die Exponentialverteilung wird eine für viele Anwendungsfälle realistische stochastische Beschreibung des Ausfallverhaltens bzw. der Ausfalllänge von technischen Komponenten erreicht.

In einer bevorzugten Ausgestaltung des erfindungsgemäßen Verfahrens umfassen die simulierten Betriebsparameter des technischen Systems ein Gesamtzuverlässigkeitsmaß des technischen Systems im vorgegebenen Betriebszeitraum, wobei dieses Gesamtzuverlässigkeitsmaß in Schritt b) über die zuvor in Schritt a) ermittelten Wahrscheinlichkeitsverteilungen für die Zuverlässigkeitsmaße der jeweiligen Module und durch Kombination der Module über einen Fehlerbaum ermittelt wird. Der Fehlerbaum beschreibt dabei das Zusammenwirken der Ausfälle auf der Ebene der Module in dem entsprechenden technischen System. Dieser Fehlerbaum ist analog zu dem Fehlerbau, der das Zusammenwirken der Komponenten in einem jeweiligen Modul beschreibt, für das entsprechend zu simulierende technische System bekannt. Das Gesamtzuverlässigkeitsmaß wird dabei vorzugsweise wiederum basierend auf einer Monte-Carlo-Simulation ermittelt, wobei vorzugsweise eine Vielzahl von Gesamtzuverlässigkeitsmaßen bestimmt werden und über diese Gesamtzuverlässigkeitsmaße der Mittelwert gebildet wird.

In einer weiteren Ausgestaltung des erfindungsgemäßen Verfahrens umfassen die Betriebsparameter des technischen Systems die Leistung des technischen Systems repräsentierende Ausgabewerte. Der Begriff "Leistung" ist dabei weit zu verstehen und kann beispielsweise in einem Energieerzeugungssystem die Menge an erzeugter Energie bzw. in einem Produktionssystem die Menge an produzierten Produkten umfassen. Vorzugsweise sind die Ausgabewerte dabei prozentuale Werte und das technische System ist insbesondere auf eine Soll-Leistung von 100% dimensioniert.

In einer besonders bevorzugten Ausführungsform des erfindungsgemäßen Verfahrens ist für jede Kombination aus ausgefallenen und nicht ausgefallenen Modulen des technischen Systems ein Ausgabewert vorgegeben, wobei in Schritt b) basierend auf den Wahrscheinlichkeitsverteilungen der Zuverlässigkeitsmaße der jeweiligen Module die Aufteilung von Zeitintervallen des Auftretens von verschiedenen Ausgabewerten im vorgegebenen Betriebszeitraum bestimmt wird. Auf diese Weise erhält man einen guten Überblick, wie lange in dem entsprechenden Betriebszeitraum bestimmte Ausgabewerte durch das technische System bereitgestellt werden.

In einer weiteren Variante des erfindungsgemäßen Verfahrens werden in Schritt b) eine Vielzahl von Simulationsschritten durchgeführt, wobei in jedem Simulationsschritt eine Aufteilung von Zeitintervallen des Auftretens von verschiedenen Ausgabewerten im vorgegebenen Betriebszeitraum simuliert wird und über alle simulierten Aufteilungen eine gemittelte Aufteilung bestimmt wird. Vorzugsweise werden bei der Bestimmung der Aufteilung von Zeitintervallen des Auftretens von verschiedenen Ausgabewerten im vorgegebenen Betriebsintervall ferner auch geplante Wartungsintervalle für die jeweiligen Module des technischen Systems berücksichtigt.

In einer weiteren Ausgestaltung des erfindungsgemäßen Verfahrens wird in jedem Simulationsschritt ein über den vorgegebenen Betriebszeitraum gemittelter Ausgabewert bestimmt und aus den Häufigkeiten der gemittelten Ausgabewerte eine Verteilungsfunktion ermittelt.

Das erfindungsgemäße Verfahren kann für beliebige technische Systeme eingesetzt werden. Insbesondere können mit dem erfindungsgemäßen Verfahren die Betriebsparameter eines technischen Systems in der Form einer Energieerzeugungsanlage oder eines Teils einer Energieerzeugungsanlage simuliert werden, wobei die Energieerzeugungsanlage insbesondere eine IGCC-Anlage ist (IGCC = Integrated Gasification Combined Cycle). Solche Anlagen erzeugen Energie basierend auf einer vorgeschalteten Brennstoffvergasung. Für solche IGCC-Anlagen können z.B. die Betriebsparameter dieser Brennstoffvergasung simuliert werden.

Neben dem oben beschriebenen Verfahren betrifft die Erfindung ferner ein Computerprogrammprodukt mit einem auf einem maschinenlesbaren Träger gespeicherten Programmcode zur Durchführung jeder Variante des erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:

Fig. 1    eine schematische Darstellung eines Teils eines technischen Systems in der Form einer IGCC-Anlage, wobei eine vorgeschaltete Kohlevergasung der Anlage wiedergegeben ist;

Fig. 2    ein Diagramm, welches ein Beispiel einer in einer Ausführungsform der Erfindung verwendeten Wahr- scheinlichkeitsdichte einer Komponente eines Moduls eines technischen Systems zeigt;

Fig. 3    ein Diagramm, welches die aus der Wahrscheinlich- keitsdichte der Fig. 2 resultierende Verteilungs- funktion wiedergibt;

Fig. 4    ein Diagramm, welches ein Beispiel einer mit einer Ausführungsform der Erfindung generierten Vertei- lungsfunktion für die Zuverlässigkeit eines Moduls eines technischen Systems zeigt;

Fig. 5    ein Diagramm, welches die mit einer Ausführungsform der Erfindung simulierte Aufteilung der Ausgabewer- te eines technischen Systems in einem Betriebszeit- raum wiedergibt; und

Fig. 6    ein Diagramm, welches die mit einer Ausführungsform der Erfindung simulierte Verteilungsfunktion der Ausgabewerte eines technischen Systems wiedergibt.

Das erfindungsgemäße Verfahren kann zur Simulation von Betriebsparametern beliebiger technischer Systeme eingesetzt werden. Ein besonderer Anwendungsfall ist die Simulation von Betriebsparametern einer Energieerzeugungsanlage, insbesondere einer sog. IGCC-Anlage, bei der zunächst mit einer vorgeschalteten Brennstoffvergasung ein Primärbrennstoff in ein energiereiches Brenngas umgewandelt wird, welches dann zum Betrieb der entsprechenden Energieerzeugungsanlage verwendet wird.

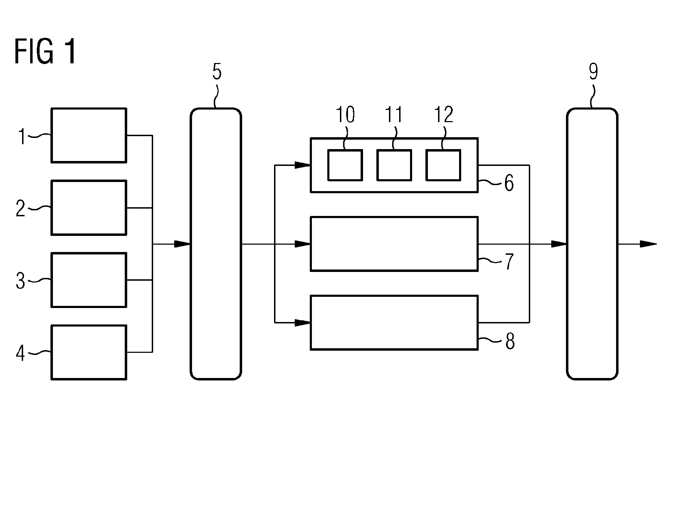

Fig. 1 zeigt schematisch die in einer Ausführungsform der Erfindung simulierten Module einer Brennstoffvergasung in der Form einer Kohlevergasung in einer IGCC-Anlage. Es sind dabei vier parallel geschaltete Kohlemühlen 1, 2, 3 und 4 vorgesehen, welche Kohle zur Kohlestaub mahlen, der über einen sog. Header 5 entsprechenden Vergasern 6, 7 und 8 zugeführt wird, welche hieraus das in der Anlage verwendete Brenngas erzeugen. Das Brenngas aus den einzelnen Vergasern wird wiederum über einen entsprechenden Header 9 zusammengeführt und von dort dann der eigentlichen Verbrennung zugeführt. Als Betriebsparameter kann erfindungsgemäß z.B. der Ausgabewert der Kohlevergasung in der Form der erzeugten Menge an Brenngas simuliert werden. Der Ausgabewert wird dabei als prozentualer Wert des gerade erzeugten Brenngases in Bezug auf eine Sollmenge von 100% Brenngas angegeben. Der Ausgabewert wird im Folgenden auch als äquivalente Ausgabe bezeichnet. Die Kohlevergasung ist dabei derart ausgelegt, dass beim Betrieb mit drei Kohlemühlen sowie drei Vergasern eine äquivalente Ausgabe von 100% erreicht wird. Durch die Verwendung von vier Kohlemühlen wird das System redundant dahingehend ausgelegt, dass auch bei einem Ausfall bzw. einer geplanten Wartung einer Kohlemühle immer noch ein Ausgabewert von 100% vorliegt. Dies ist bei einer Wartung bzw. einem Ausfall eines Vergasers nicht gegeben.

In dem Szenario der Fig. 1 umfasst jedes der einzelnen Module 1 bis 9 weitere Komponenten, deren Betrieb wiederum den Betrieb des gesamten Moduls beeinflusst. Beispielhaft sind dabei für den Vergaser 6 entsprechende Komponenten 10, 11 und 12 schematisch angedeutet. Dabei führen bestimmte Kombinationen von Ausfällen der einzelnen Komponenten zu dem Ausfall des gesamten Moduls. Für die Module existieren entsprechende Fehlerbäume, welche beschreiben, wann eine Kombination von vorbestimmten Ausfällen von Komponenten auch zu einem Ausfall des Moduls führt. Die Zusammensetzung der einzelnen Module und deren Komponenten sind dabei vorab bekannt und stellen eine entsprechende Konfiguration des technischen Systems dar. Insbesondere ist für jede Komponente eines jeweiligen Moduls eine Wahrscheinlichkeitsverteilung für den Ausfallzeitpunkt der entsprechenden Komponente nach Inbetriebnahme bzw. nach Wiederinbetriebnahme nach einem Ausfall gegeben. Ferner ist für jede Komponente eines jeweiligen Moduls eine Wahrscheinlichkeitsverteilung für die Länge des Ausfalls der jeweiligen Komponente gegeben. Die entsprechenden Wahrscheinlichkeitsverteilungen wurden z.B. empirisch, beispielsweise aus dem Realbetrieb der jeweiligen Komponente, ermittelt.

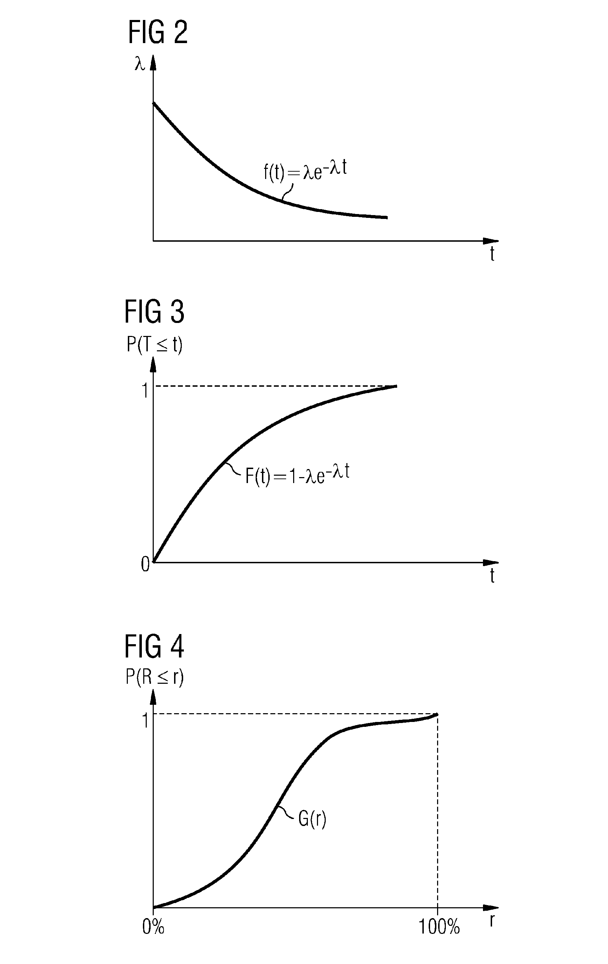

Fig. 2 zeigt ein Beispiel einer Dichtefunktion f (t) einer Wahrscheinlichkeitsverteilung für den Ausfallzeitpunkt t einer Komponente eines zu simulierenden technischen Systems in der Form einer Exponentialverteilung. Der Parameter λ stellt dabei den Kehrwert der mittleren Zeitdauer MTBF (MTBF = Mean Time Between Failure) zwischen zwei Ausfällen der Komponente dar.

Dieser Wert ist dabei für jede Komponente des jeweiligen Moduls des technischen Systems bekannt. In Analogie zu dem Ausfallzeitpunkt kann auch die Ausfallzeitdauer in der Form der Exponentialverteilung der Fig. 2 beschrieben werden. In diesem Fall stellt der Parameter t dann die Länge des Ausfalls einer Komponente dar und λ ist der Kehrwert der mittleren Dauer MDT (MDT = Mean Down Time) eines Ausfalls, wobei diese Zeitdauer ebenfalls für jede Komponente bekannt ist. Aus der Wahrscheinlichkeitsdichte der Fig. 2 ergibt sich durch Integration die entsprechende Verteilungsfunktion F(t), welche in Fig. 3 wiedergegeben ist. Die Verteilungsfunktion gibt dabei für einen Zeitpunkt t die Wahrscheinlichkeit P(T≤t) an, dass das Ereignis eines Ausfalls zu einem Zeitpunkt T aufgetreten ist, der kleiner bzw. gleich dem Zeitpunkt t ist. Stellt f(t) die Dichtefunktion für die Länge eines Ausfalls dar, wird durch F(t) die Wahrscheinlichkeit beschrieben, dass die Länge eines Ausfalls kleiner oder gleich t ist.

In der hier beschriebenen Ausführungsform des erfindungsgemäßen Verfahrens wird basierend auf einer ereignis-diskreten Simulation nunmehr für einen vorgegebenen Betriebszeitraum bzw. Prognosezeitraum des entsprechenden technischen Systems, beispielsweise für ein Jahr, die auftretenden äquivalenten Ausgaben innerhalb dieses Zeitraums ermittelt. Zunächst wird dabei für jedes einzelne Modul des technischen Systems mit Hilfe einer Monte-Carlo-Simulation eine Wahrscheinlichkeitsverteilung für die Zuverlässigkeit des jeweiligen Moduls bestimmt. Dies erfolgt dadurch, dass zunächst jede einzelne Komponente eines jeweiligen Moduls betrachtet wird und der vorgegebene Betriebszeitraum basierend auf einer Monte-Carlo-Simulation durchlaufen wird. Dabei wird die Verteilungsfunktion der Fig. 3 verwendet.

Im Rahmen der Monte-Carlo-Simulation werden Wahrscheinlichkeitswerte zwischen 0 und 1 gewürfelt, wobei für einen gewürfelten Wahrscheinlichkeitswert auf der Ordinate dann gemäß der Verteilungsfunktion der Fig. 3 der dem gewürfelten Wahrscheinlichkeitswert entsprechende Zeitpunkt t auf der Abszisse ermittelt wird, der dann einen Ausfallzeitpunkt darstellt. Anschließend wird mit einer entsprechenden Verteilungsfunktion für die Dauer des Ausfalls wiederum durch Würfeln von Werten zwischen 0 und 1 und Ermitteln einer entsprechenden Zeitdauer über die Verteilungsfunktion die Länge des Ausfalls bestimmt. Schließlich werden wiederum ein neuer Ausfallzeitpunkt und eine entsprechende Ausfalllänge gewürfelt. Dies wird solange wiederholt, bis der gesamte betrachtete Betriebszeitraum durchlaufen ist.

Man führt die gerade beschriebene Simulation dabei für jede Komponente eines jeweiligen Moduls des technischen Systems durch. Man erhält somit für jede Komponente ein Diagramm, welches beschreibt, wann eine Komponente innerhalb des Betriebszeitraums funktioniert bzw. ausgefallen ist. Die Diagramme aller Komponenten werden dann über den Fehlerbaum kombiniert, um zu ermitteln, wann das gesamte Modul innerhalb des Betriebszeitraums ausgefallen ist. Führt dabei beispielsweise nur der Ausfall aller Komponenten zu dem Ausfall des entsprechenden Moduls, ergibt sich hieraus ein Diagramm, bei dem innerhalb des Betriebszeitraums nur in den zeitlichen Bereichen, in denen alle Komponenten ausgefallen sind, auch ein entsprechender Ausfall des Moduls vorliegt.

Als Ergebnis der oben beschriebenen Simulationen erhält man somit die Simulation der Ausfallzeiten eines jeweiligen Moduls innerhalb eines Betriebszeitraums. Der Anteil der Zeit, in dem das jeweilige Modul nicht ausgefallen ist, stellt dabei eine entsprechende Zuverlässigkeit des jeweiligen Moduls dar. Die oben beschriebenen Simulationen werden eine Vielzahl von Malen wiederholt, d.h. man erhält hierdurch eine Vielzahl von simulierten Zuverlässigkeitswerten für das jeweilige Modul. Aus dieser Vielzahl von Zuverlässigkeitswerten kann dann eine Häufigkeitsverteilung und hierdurch eine entsprechende Wahrscheinlichkeitsverteilung der Zuverlässigkeiten ermittelt werden.

Fig. 4 zeigt beispielhaft einen ermittelten Verlauf einer entsprechenden Verteilungsfunktion G(t) der Wahrscheinlichkeitsverteilung der Zuverlässigkeiten eines Moduls. Entlang der Abszisse ist dabei der Zuverlässigkeitswert r angedeutet, der zwischen 0% für einen kompletten Ausfall des jeweiligen Moduls innerhalb des Betriebszeitraums und 100% für keinen Ausfall des Moduls im Betriebszeitraum liegt. Entlang der Ordinate ist die Wahrscheinlichkeit aufgetragen, dass eine beobachtete Zuverlässigkeit R kleiner bzw. gleich einem entsprechenden Zuverlässigkeitswert r entlang der Abszisse ist.

In einer Variante des erfindungsgemäßen Verfahrens kann basierend auf den ermittelten Verteilungsfunktionen für jedes Modul eines technischen Systems eine Gesamtzuverlässigkeit des technischen Systems für den betrachteten Betriebszeitraum ermittelt werden. Dabei ist wiederum ein entsprechender Fehlerbaum zwischen den einzelnen Modulen bekannt, welcher beschreibt, wie die Ausfälle der einzelnen Module zu einem Gesamtausfall des technischen Systems führen können. Zur Berechnung der Gesamtzuverlässigkeit werden wiederum Monte-Carlo-Simulationen basierend auf den jeweiligen Verteilungsfunktionen der Module durchgeführt. Das heißt, es wird durch Zufall wiederum ein Wahrscheinlichkeitswert zwischen 0 und 1 ermittelt und basierend auf der entsprechenden Verteilungsfunktion eines Moduls (z.B. der Funktion der Fig. 4) ein Zuverlässigkeitswert bestimmt. Dies wird für jedes Modul durchgeführt. Basierend auf diesen Zuverlässigkeitswerten, welche auch als Wahrscheinlichkeiten für die Funktionsfähigkeit des Moduls im Betriebszeitraum interpretiert werden können, kann dann mit Hilfe des Fehlerbaums eine Gesamtzuverlässigkeit des technischen Systems ermittelt werden. Es wird dabei eine Vielzahl von Simulationen durchgeführt, wobei jede Simulation zu einer Gesamtzuverlässigkeit des technischen Systems führt. Als Betriebsparameter wird dann z.B. der über alle simulierten Gesamtzuverlässigkeiten gemittelte Zuverlässigkeitswert bestimmt.

Neben bzw. alternativ zu dieser Gesamtzuverlässigkeit kann in einer weiteren Variante des erfindungsgemäßen Verfahrens ferner die Aufteilung von entsprechend auftretenden äquivalenten Ausgaben des technischen Systems auf den Betriebszeitraum bestimmt werden. Dabei sind für alle Kombinationen von ausgefallenen und nicht ausgefallenen Modulen des technischen Systems entsprechende äquivalente Ausgaben vorgegeben. Wiederum durch Monte-Carlo-Simulationen der Zuverlässigkeitswerte basierend auf der Wahrscheinlichkeitsverteilung der Zuverlässigkeiten der einzelnen Module kann hierdurch für einen Betriebszeitraum simuliert werden, wie sich die verschiedenen äquivalenten Ausgaben des gesamten technischen Systems auf den Betriebszeitraum aufteilen.

Betrachtet man beispielsweise ein technisches System, bei dem ein Ausfall von zwei Modulen zu einer äquivalenten Ausgabe von 50% führt, so ergibt sich folgendes Szenario: Wird als Zuverlässigkeit mittels Monte-Carlo-Simulation basierend auf der Verteilung der Zuverlässigkeiten des jeweiligen Moduls ein Zuverlässigkeitswert von 80% für das eine Modul und 90% für das andere Modul ermittelt, so ergibt sich für einen Anteil von (100% - 80%) x (100% - 90%) = 2% des gesamten Betriebszeitraums eine äquivalente Ausgabe von 50%. In geeigneter Weise sind auch entsprechende Ausgabewerte für andere Kombinationen aus ausgefallenen bzw. nicht ausgefallenen Modulen gegeben, so dass sich insgesamt ein Diagramm ergibt, bei dem für entsprechende Abschnitte des Betriebszeitraums die sich daraus ergebende äquivalente Ausgabe wiedergegeben ist.

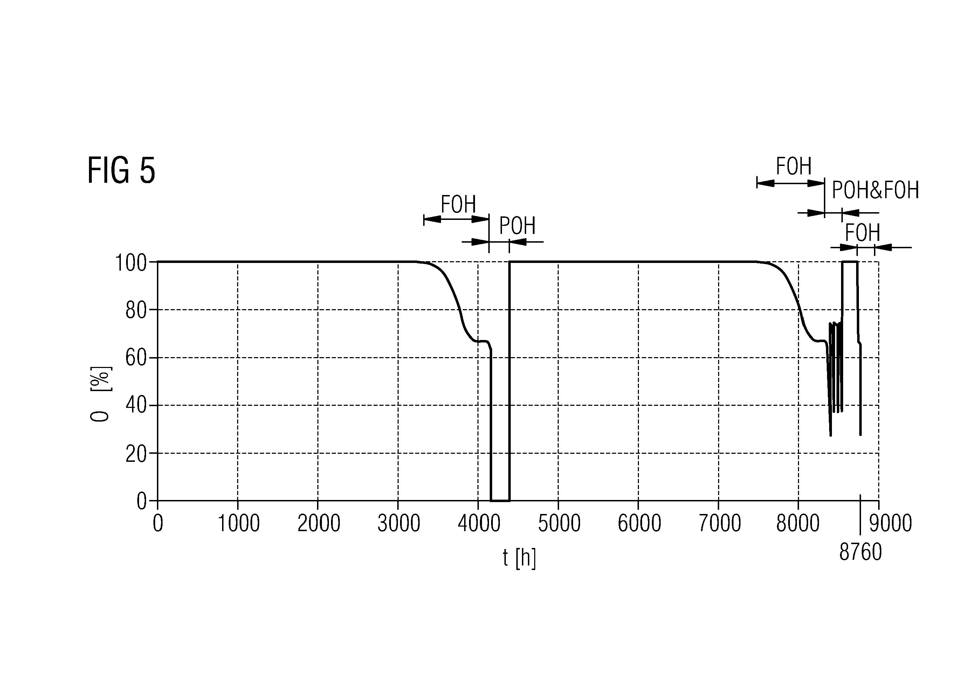

Fig. 5 zeigt beispielhaft ein mit einer Ausführungsform der Erfindung ermitteltes Diagramm, bei dem innerhalb eines Betriebszeitraums von einem Jahr (= 8760 Stunden) die über mehrere Simulationen bestimmte und über die Simulationen gemittelte äquivalente Ausgabe O eines technischen Systems in Prozent wiedergegeben ist. Hierbei wurden neben den nicht geplanten Ausfällen, deren Zeiträume in Fig. 5 als FOH (FOH = Forced Outage Hours) angedeutet sind, ferner geplante Wartungsarbeiten berücksichtigt, welche in Fig. 5 als POH (POH = Planned Outage Hours) bezeichnet sind. Die Abschnitte der geplanten Wartung sind dabei in denjenigen Zeitabschnitten eingezeichnet, in denen die Wartung durchgeführt wird. Ansonsten ist die äquivalente Ausgabe in absteigender Reihenfolge der ermittelten Ausgabewerte von links nach rechts angeordnet. Man erkennt, dass bei etwa 4200 Betriebsstunden des technischen Systems eine geplante Wartung durchgeführt wird, bei der alle Module nicht in Betrieb sind, was zu einer äquivalenten Ausgabe von 0 führt. Darüber hinaus finden bei in etwa 8600 Betriebsstunden geplante Wartungen statt, bei denen nur einzelne Module gewartet werden. Zu diesen Zeitpunkten liegen dann neue Konfigurationen des technischen Systems mit entsprechend nicht im Betrieb befindlichen Modulen vor, für die wiederum mit dem erfindungsgemäßen Verfahren geeignete Ausfälle während dieser geplanten Wartungszeiträume bestimmt werden können, so dass die geplanten Wartungen mit Ausfällen überlagert sind.

Wie aus Fig. 5 anschaulich ersichtlich wird, kann mit dem erfindungsgemäßen Verfahren die Verteilung der äquivalenten Ausgaben über einen betrachteten Betriebszeitraum eines technischen Systems geeignet bestimmt werden. Auf diese Weise können verschiedene Konfigurationen des technischen Systems bei dessen Entwurf hinsichtlich Zuverlässigkeit bzw. der erwarteten äquivalenten Ausgabe bewertet und verglichen werden, wodurch die Wirtschaftlichkeit einer entsprechenden technischen Anlage vor deren Bau geeignet abgeschätzt werden kann. Dabei werden die Betriebsparameter immer für eine vorbestimmte Betriebsdauer ermittelt, wobei insbesondere auch während der Betriebsdauer durchgeführte geplante Wartungsmuster berücksichtigt werden können.

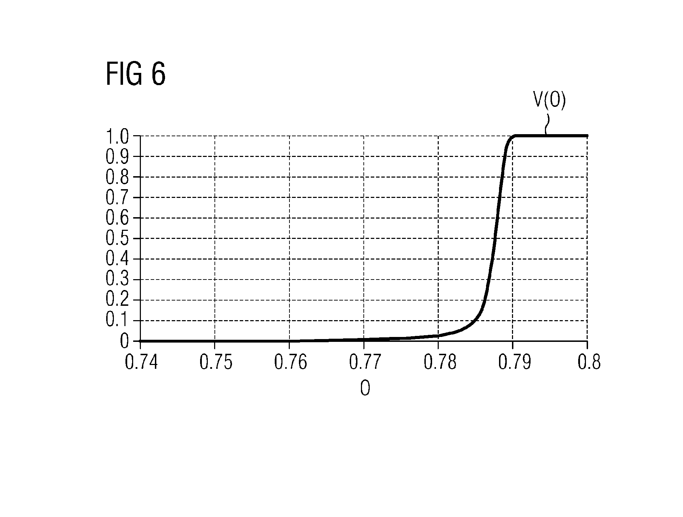

Fig. 6 zeigt ein weiteres Diagramm, welches basierend auf einer Variante der Erfindung aus den entsprechend simulierten Aufteilungen der äquivalenten Ausgaben auf den Betriebszeitraum generiert werden kann. Dabei wird für jede Simulation der Aufteilung der äquivalenten Ausgaben auf den Betriebszeitraum die über den Betriebszeitraum gemittelte Ausgabe bestimmt. Aus den Häufigkeiten der gemittelten Ausgaben kann dann eine Dichtefunktion und hieraus die entsprechende Verteilungsfunktion ermittelt werden, wobei ein Beispiel einer solchen Funktion in Fig. 6 gezeigt ist. Die Verteilungsfunktion ist dabei als V(0) bezeichnet und repräsentiert die Wahrscheinlichkeit, dass die äquivalente Ausgabe des technischen Systems kleiner oder gleich einem entsprechenden Wert 0 auf der Abszisse ist. Die äquivalenten Ausgaben sind dabei auf Werte zwischen 0 (entspricht 0%) und 1 (entspricht 100%) skaliert. Es ist in Fig. 6 nur ein Ausschnitt aus den Ausgaben von 0,74 bis 0,8 wiedergegeben, denn genau in diesem Bereich erfolgt der Anstieg der Wahrscheinlichkeit von 0 auf 1.

**Patentansprüche**

1. Verfahren zur rechnergestützten Simulation von Betriebsparametern (O) eines technischen Systems, wobei das technische System eine Mehrzahl von Modulen (1, 2, ..., 9) umfasst, welche jeweils eine oder mehrere Komponenten (10, 11, 12) beinhalten, bei dem:

   a) in einem vorgegebenen Betriebszeitraum jeweils Ausfallereignisse mit daran anschließenden Ausfallzeiten für jede Komponente (10, 11, 12) eines jeweiligen Moduls (1, 2, ..., 9) mit Hilfe einer ersten Wahrscheinlichkeitsverteilung für den Ausfallzeitpunkt der jeweiligen Komponente (10, 11, 12) und einer zweiten Wahrscheinlichkeitsverteilung für die Länge des Ausfalls der jeweiliger Komponente (10, 11, 12) simuliert werden und hieraus eine Wahrscheinlichkeitsverteilung für ein Zuverlässigkeitsmaß (r) des jeweiligen Moduls (1, 2, ..., 9) bestimmt wird;
b) basierend auf den Wahrscheinlichkeitsverteilungen für die Zuverlässigkeitsmaße (r) der jeweiligen Module (1, 2, ..., 9) Betriebsparameter (O) des technischen Systems für den vorgegebenen Betriebszeitraum simuliert werden.

2.  Verfahren nach Anspruch 1, bei dem in Schritt a) eine Monte-Carlo-Simulation zur Simulation der Ausfallereignisse mit daran anschließenden Ausfallzeiten eingesetzt wird.

3.  Verfahren nach Anspruch 1 oder 2, bei dem in Schritt b) eine Monte-Carlo-Simulation zur Simulation der Betriebsparameter (O) eingesetzt wird.

4.  Verfahren nach einem der vorhergehenden Ansprüche, bei dem in Schritt a) eine Vielzahl von Simulationsschritten durchgeführt wird, wobei in jedem Simulationsschritt Ausfallereignisse mit daran anschließenden Ausfallzeiten für alle Komponenten eines jeweiligen Moduls (1, 2, ..., 9) im vorgegebenen Betriebszeitraum simuliert werden und durch Kombination der Komponenten (10, 11, 12) des jeweiligen Moduls (1, 2, ..., 9) über einen Fehlerbaum das Zuverlässigkeitsmaß (r) des jeweiligen Moduls (1, 2, ..., 9) als Anteil von ausfallfreier Betriebszeit des jeweiligen Moduls (1, 2, ..., 9) im vorgegebenen Betriebszeitraum bestimmt wird, wobei aus den Häufigkeiten der in der Vielzahl von Simulationsschritten ermittelten Zuverlässigkeitsmaße (r) die Wahrscheinlichkeitsverteilung für das Zuverlässigkeitsmaß (r) des jeweiligen Moduls (1, 2, ..., 9) bestimmt wird.

5.  Verfahren nach einem der vorhergehenden Ansprüche, bei dem die erste Wahrscheinlichkeitsverteilung für den Ausfallzeitpunkt einer jeweiligen Komponente (10, 11, 12) eines jeweiligen Moduls (1, 2, ..., 9) eine Exponentialverteilung ist.

6.  Verfahren nach Anspruch 5, bei dem die Dichte der ersten Wahrscheinlichkeitsverteilung wie folgt lautet:

$$f(t) = \lambda e^{-\lambda t},$$

wobei t den Ausfallzeitpunkt nach der Inbetriebnahme der jeweiligen technischen Komponente (10, 11, 12) oder Wiederinbetriebnahme der jeweiligen technischen Komponente (10, 11, 12) nach einem Ausfall repräsentiert;

wobei λ = 1/MTBF, wobei MTBF die mittlere Zeitdauer zwischen zwei Ausfällen der jeweiligen Komponente ist.

7.  Verfahren nach einem der vorhergehenden Ansprüche, bei dem die zweite Wahrscheinlichkeitsverteilung für die Länge des Ausfalls einer jeweiligen Komponente (10, 11, 12) eines jeweiligen Moduls (1, 2, ..., 9) eine Exponentialverteilung ist.

8.  Verfahren nach Anspruch 7, bei dem die Dichte der zweiten Wahrscheinlichkeitsverteilung wie folgt lautet:

$$g(x) = \beta e^{-\beta x},$$

wobei x die Länge eines Ausfalls der jeweiligen Komponente (10, 11, 12) repräsentiert;
wobei β= 1/MDT, wobei MDT die mittlere Zeitdauer eines Ausfalls der jeweiligen Komponente (10, 11, 12) ist.

9.  Verfahren nach einem der vorhergehenden Ansprüche, bei dem die Betriebsparameter (O) des technischen Systems ein Gesamtzuverlässigkeitsmaß des technischen Systems im Betriebszeitraum umfassen, wobei das Gesamtzuverlässigkeitsmaß in Schritt b) über die Wahrscheinlichkeitsverteilungen für die Zuverlässigkeitsmaße der jeweiligen Module (1, 2, ..., 9) und durch Kombination der Module (1, 2, ..., 9) über einen Fehlerbaum ermittelt wird.

10. Verfahren nach einem der vorhergehenden Ansprüche, bei dem die Betriebsparameter (O) des technischen Systems die Leistung des technischen Systems repräsentierende Ausgabewerte umfassen.

11. Verfahren nach Anspruch 10, wobei die Ausgabewerte (O) prozentuale Werte sind und das technische System vorzugsweise auf eine Soll-Leistung von 100% dimensioniert ist.

12. Verfahren nach Anspruch 10 oder 11, bei dem die Ausgabewerte (O) eine Menge von einem oder mehreren im technischen System produzierten Produkten und/oder von durch das technische System produzierter Energie beschreiben.

13. Verfahren nach einem der Ansprüche 10 bis 12, bei dem für jede Kombination aus ausgefallenen und nicht ausgefallenen Modulen (1, 2, ..., 9) des technischen Systems ein Ausgabewert (O) vorgegeben ist, wobei in Schritt b) basierend auf den Wahrscheinlichkeitsverteilungen für die Zuverlässigkeitsmaße (r) der jeweiligen Module (1, 2, ..., 9) die Aufteilung von Zeitintervallen des Auftretens von verschiedenen Ausgabewerten (O) im vorgegebenen Betriebszeitraum bestimmt wird.

14. Verfahren nach Anspruch 13, bei dem in Schritt b) eine Vielzahl von Simulationsschritten durchgeführt wird, wobei in jedem Simulationsschritt eine Aufteilung von Zeitintervallen des Auftretens von verschiedenen Ausgabewerten (O) im vorgegebenen Betriebszeitraum simuliert wird und über alle simulierten Aufteilungen eine gemittelte Aufteilung bestimmt wird.

15. Verfahren nach Anspruch 13 oder 14, bei dem bei der Bestimmung der Aufteilung von Zeitintervallen des Auftretens von verschiedenen Ausgabewerten (O) im vorgegebenen Betriebszeitraum ferner geplante Wartungsintervalle für die jeweiligen Module (1, 2, ..., 9) des technischen Systems berücksichtigt werden.

16. Verfahren nach Anspruch 14 oder 15, bei dem in jedem Simulationsschritt ein über den vorgegebenen Betriebszeitraum gemittelter Ausgabewert (O) bestimmt wird und aus den Häufigkeiten der gemittelten Ausgabewerte eine Verteilungsfunktion (V (0)) ermittelt wird.

17. Verfahren nach einem der vorhergehenden Ansprüche, bei dem die Betriebsparameter (O) eines technischen Systems in der Form einer Energieerzeugungsanlage oder eines Teils einer Energieerzeugungsanlage simuliert werden, wobei die Energieerzeugungsanlage insbesondere eine IGCC-Anlage ist.

18. Verfahren nach Anspruch 17, wobei die Betriebsparameter (O) der Brennstoffvergasung einer IGCC-Anlage simuliert werden.

19. Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner läuft.

FIG 1

## FIG 2

$$\lambda$$

$$f(t) = \lambda e^{-\lambda t}$$

$$t$$

## FIG 3

$$P(T \le t)$$

$$1$$

$$F(t) = 1 - \lambda e^{-\lambda t}$$

$$0$$

$$t$$

## FIG 4

$$P(R \le r)$$

$$1$$

$$G(r)$$

$$0\%$$        $$100\%$$     $$r$$

FIG 5

FIG 6